# EUROPEAN PATENT APPLICATION

(11) **EP 1 044 807 A2**
(43) Date of publication of application: **18.10.2000**
(21) Application number: 00105290.1
(22) Date of filing: 14.03.2000
(51) Int. Cl.: B32B 29/00, B31F 5/00, B31F 1/07

(54) **Structure of a paper product particularly for sanitary and domestic use, and method for manufacturing the same**

(30) Priority: 16.04.1999 IT MI990797
(71) Applicant: CARTOINVEST SOCIETA' FINANZIARIA E DI PARTECIPAZIONE S.p.A., 51100 Pistoia (IT)
(72) Inventor: Carrara, Marco, 55061 Carraia (Lucca) (IT)
(74) Representative: Rapisardi, Mariacristina

(57) **Abstract**

Structure of paper product (1) particularly for sanitary and domestic use, comprises at least one multilayer sheet (2) having at least a first (3), a second (4) and a third paper layer (5) reciprocally associated, the first (3) and the second (4) layer are associated to one another through mechanical deformation of their surface (9), and are associated to at least the third (5) layer through gluing (15).

## Description

The present invention relates to a structure of paper product particularly for sanitary and domestic use, and to a method for manufacturing the same.

As known, paper elements adapted to any use, such as handkerchiefs, toilet paper or kitchen paper, cloths, napkins, etc., are manufactured by associating various paper layers with one another.

The association of these layers causes several disadvantages among which, the two most relevant problems are essentially due to the type of association of the layers.

In fact, in particular, the layers are associated through a gluing operation both because of the valid result obtainable, that is, because it prevents partial or total separation of the layers during use, and the fact that the aesthetic appearance of the finished product is unaltered.

Nevertheless, if on the one side said operation guarantees a valid reciprocal hold of the layers, on the other side it determines a significant loss of softness of the finished product, caused by a stiffening of the latter due to the adhesive.

In addition, the use of adhesives causes an increase in the production costs which, besides the use of large amounts of adhesives, is also due to a lower production speed caused by the time taken by the adhesive for drying.

Apart from the difficulty of associating four layers, their gluing also causes, besides a decrease in the product biodegradability, such a loss of softness of the finished product as to make its qualitative value low; above all, this is true, for those products coming into contact with the user's skin, such as toilet paper.

In this situation, the technical task at the basis of the present invention is that of finding a remedy for the above disadvantages of the prior art.

Within this technical task, an important purpose of the present invention is that of devising a paper product and a method for manufacturing the same, which should allow the finished product to be extremely soft, although being made up of four or more layers, having at the same time an aesthetical appearance significantly greater than that of the products currently on the market.

A further purpose of the present invention is that of devising a paper product and a method for manufacturing the same, which should be provided with a remarkable structural sturdiness since the separation of the paper layers with which it is formed is prevented also during heavy use.

A further purpose of the present invention is that of devising a paper product and a method for manufacturing the same, which should allow high production speeds and thus, limited costs of the finished product.

A further purpose of the present invention is that of devising a paper product and a method for manufacturing the same, which besides being highly flexible, should also be highly biodegradable.

Last but not least, another purpose of the present invention is that of devising a paper product and a method for manufacturing the same, which should allow adding several additives to the finished product on the basis of the final use for which it is intended.

The technical task mentioned above, as well as the other purposes, are substantially achieved by a structure of paper product particularly for sanitary and domestic use, comprising at least one multilayer sheet having at least a first, a second and a third paper layer reciprocally associated, characterised in that said at least first and second layer are associated to one another through mechanical deformation of their surface, and that said mechanically associated first and second layer are associated to said at least third layer through gluing.

The structure of paper product object of the invention is manufactured through a method which consists in associating at least a first and a second layer coming from the unrolling of a first and a second coil of single-layer paper by means of a mechanical operation of surface deformation of said first and second layer; in winding said first and second layer reciprocally associated around a core of a third coil; in associating said first and second layer mechanically associated to one another, to at least a third and a fourth layer coming from a third and a fourth single-layer coil through a gluing operation; and in winding said at least four associated layers around a coil so that said first and second layer face said core.

### Brief description of the drawings

Further features and advantages of the present invention will appear more clearly from the following detailed description of a preferred but not exclusive embodiment of a structure of a paper product particularly for sanitary and domestic use, and method for manufacturing the same according to the invention, made by way of a not limitative example with reference to the attached drawings. In such drawings:

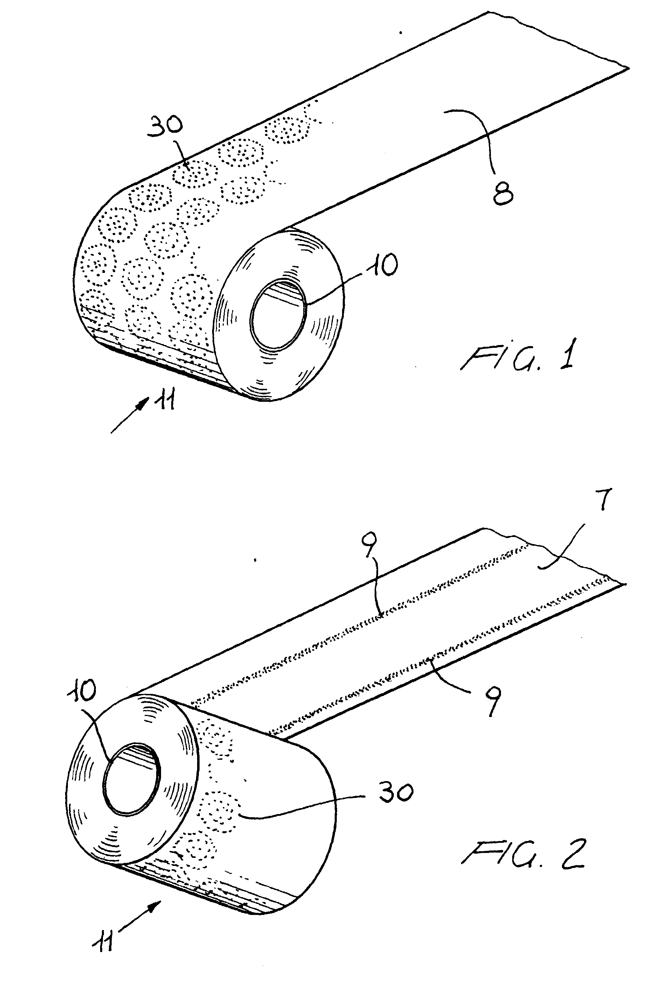

- Figure 1 shows a perspective view from above of a paper product such as for example, a roll of toilet paper according to the invention;

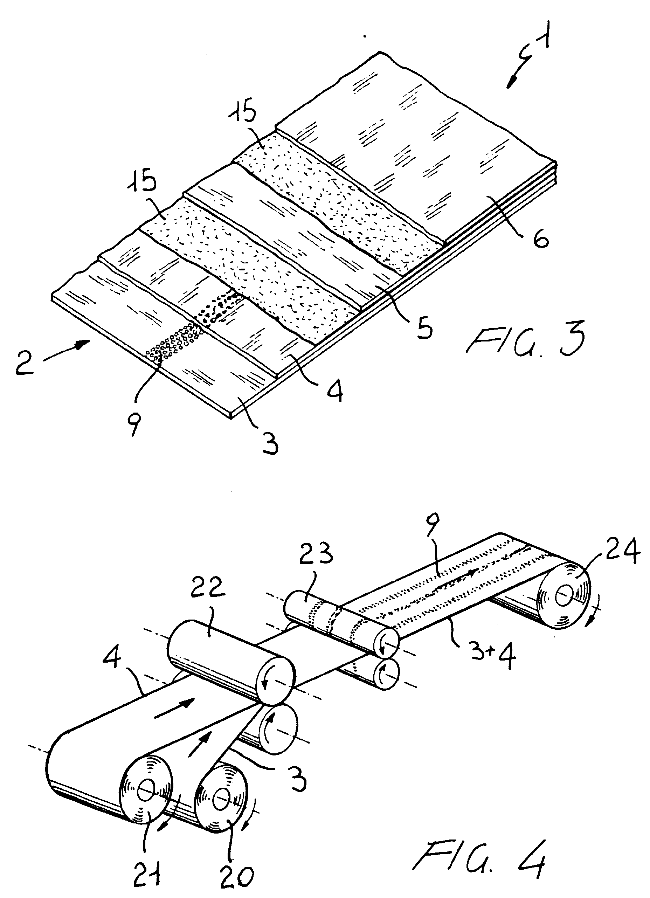

- Figure 2 shows a perspective view from below of the roll of toilet paper shown in figure 1 according to the invention;
- Figure 3 shows an enlarged view of different layers of the paper product according to the invention;
- Figures 4 and 5 schematically show how layers are associated, for example four layers, for manufacturing the paper product according to the invention;
- Figure 6 schematically shows a sectional view of the arrangement of the four layers before being reciprocally associated according to the invention; and
- Figure 7 shows how it is possible to carry out an embossing operation, once the four layers of the paper product have been associated to one another according to the invention, so as to make them aesthetically pleasant.

With reference to the above figures, the structure of paper product, as a whole referred to with reference numeral 1, comprises at least one multilayer sheet 2 made up of three paper layers and in particular, in the example shown and described, four paper layers reciprocally associated to one another.

Advantageously, the first and the second layer, referred to with numerals 3 and 4, are associated to one another by means of an operation of mechanical deformation of their surface, and in particular, through an operation of knurling which allows a partial permeation of paper material of the two layers that are thus, effectively associated to one another.

The first and the second layer 3 and 4, associated to one another, as already said, through an operation of knurling are then associated to the third layer 5 and at least also to the fourth layer 6 through a gluing operation by means of a layer of glue 15.

Obviously, in case of a three-layer product, the gluing operation will be carried out only on the third layer 5 whereas in case of more than four layers, the first, the second and the third layer will be associated through a knurling operation while the fourth and the fifth will be associated through gluing.

In other words, the increase in the number of layers of the paper product will imply an increase in the number of layers that are associated through knurling, whereas the number of two layers to be associated to one another and with the previous layers through gluing stays unaltered.

Taking as an example a four-layer paper product, the first and the second layer 3 and 4 are arranged into the inner side 7 of the multilayer sheet 2 that is opposed to the normal side of view, referred to with numeral 8.

In particular, the knurling of the first and second layer 3 and 4 is carried out on two or more strips 9 having a limited transverse width but that extend along the entire longitudinal development of one or more multilayer sheets associated to one another.

This type of association of the layers of the multilayer sheet 2 allows obtaining two significant advantages.

In particular, the first and most important advantage is that the outer side 8 of the multilayer sheet presents a remarkable softness since the glue used is just the amount needed for associating the two layers and for associating the latter to the two layers knurled with one another.

The second advantage obtained is that the knurling carried out on the first and second layer 3 and 4 is not visible and thus, it does not cause a depletion of the finished product from the aesthetic point of view.

In the case, for example, of a four-layer roll of toilet paper, the multilayer sheets are wound around a core 10 so that strip 9, determined by the knurling, is not visible on the outer surface 8 of the roll, but it can be felt only in the inner side 7 of the same.

In this way, as already said, strip or strips 9 determined by the knurling will not prejudice the aesthetic characteristics of the roll of toilet paper or any other product thus manufactured, such as napkins, handkerchiefs, cloths, etc.

The method for manufacturing the paper product and in particular the multilayer sheet 2 consists in associating at least a first and a second layer 3 and 4, coming from the unrolling of a first and a second coil 20 and 21 of single-layer paper, through a mechanical operation of surface deformation of the first and second layer 3 and 4 and in particular, through a knurling operation.

In particular, the first and the second layer 3 and 4 make up the coil 24 passing through a knurling device, for example two knurling rollers 23.

The first and the second layer 3 and 4, knurled with one another and wound around the third coil 24, are unwound again together with a third and a fourth layer 5 and 6 coming from a fifth and a sixth single-layer coil 25 and 26.

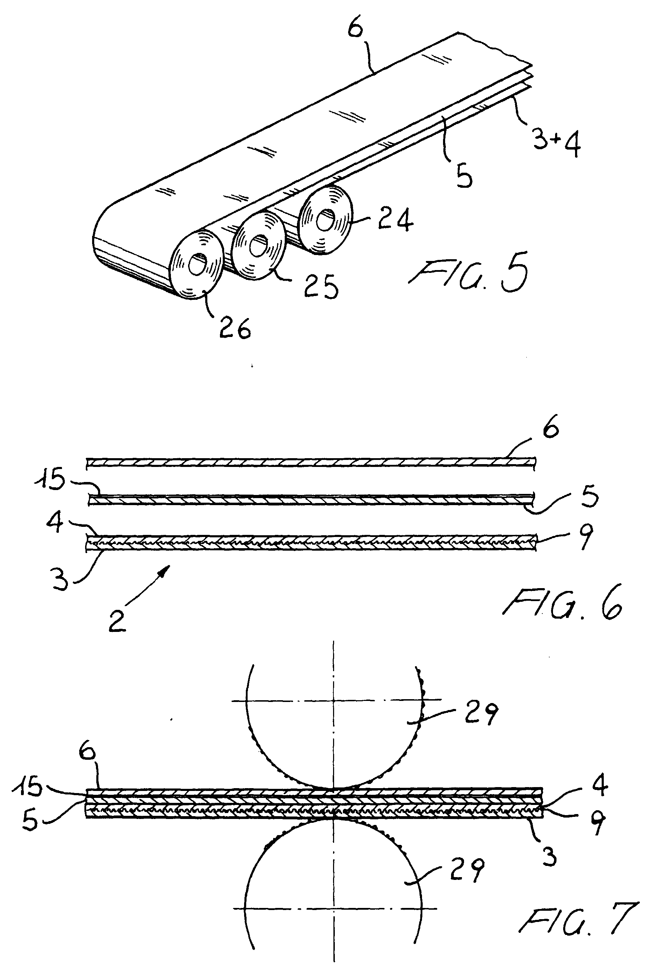

For example, as shown in figure 5, during the unrolling of the respective layers, the arrangement of the third coil 24 and of the fourth and fifth coil 25 and 26 allows associating the first and the second layer knurled to one another with the fifth and the sixth layer through a gluing operation, as in the example schematically shown in figure 6, so that the first and the second knurled layer are always in the inner side, not visible, of a roll, such as a roll of toilet paper 11 or a roll of kitchen paper, or the like.

Afterwards, as shown in figure 7, once the four layers have been associated with one another, it is possible to carry out an embossing operation on them through cylinders 29, so as to impart them a pleasant aesthetic pattern 30 and to increase their softness.

In addition, it must be stated that one or more additives can be added to the four layers thus associated so as to improve their characteristics on the basis of the expected use of the product.

For example, particular resins can be added to knurled layers and/or layers associated through gluing so as to increase their resistance to moisture or perfumed or balsamic additives can be added as well.

Object of the present invention is also a machine for manufacturing a paper product particularly for sanitary and domestic use, which as seen, comprises a rereeling device 22 arranged downstream of a continuous paper machine, not shown.

Advantageously, the rereeling machine also comprises a knurling device 23 to allow this operation on at least two layers of the multilayer sheet.

The invention achieves the proposed purposes and obtains several important advantages.

In fact, a paper product and a method for manufacturing the same have been devised, which besides allowing an excellent resistance of the finished product since the different sheets of which it is made up do not detach, also allows maintaining a high degree of softness and flexibility of the same together with the possibility of manufacturing it at low costs, additionally obtaining a high degree of biodegradability determined by the small amount of adhesive used.

Last but not least, it must be noted that, besides these characteristics, the finished product presents a high aesthetic degree since its visible surface is not modified at all by the operations for associating the various paper layers of which it is made up.

The invention thus conceived could be subject to several changes and variants, all of them falling within the scope of the present invention.

Moreover, all components can be replaced with technically equivalent elements.

The materials used, shapes and dimensions can be of any type according to the needs.

## Claims

1. Structure of a paper product particularly for sanitary and domestic use, comprising at least one multilayer sheet having at least a first, a second and a third paper layer reciprocally associated, characterised in that said at least first and second layer are associated to one another through mechanical deformation of their surface, and that said mechanically associated first and second layer are associated to said at least third layer through gluing.

2. Structure according to claim 1, characterised in that it comprises at least a fourth layer associated to said third layer through gluing.

3. Structure according to one or more of the previous claims, characterised in that said first and second layer are arranged into the inner side of said multilayer sheet opposed to the normal outer side of view.

4. Structure according to one or more of the previous claims, characterised in that said mechanical deformation is obtained through a knurling operation of said first and second layer.

5. Structure according to one or more of the previous claims, characterised in that said first, second and at least third layer are embossed.

6. Structure according to one or more of the previous claims, characterised in that said knurling is carried out on at least one strip having limited transverse width along the entire longitudinal development of said multilayer sheet.

7. Structure according to one or more of the previous claims, characterised in that the degree of softness of said inner side having said knurling is lower than that of the normally used outer side.

8. Structure according to one or more of the previous claims, characterised in that it comprises at least one core around which a plurality of said multilayer sheets are wound, adapted to define a roll of toilet paper with said first and second layer arranged into it in the inner side facing said core.

9. Method for manufacturing a paper product particularly for sanitary and domestic use, characterised in that it consists in associating at least a first and a second layer coming from the unrolling of a first and a second coil of single-layer paper by means of a mechanical operation of surface deformation of said first and second layer; in winding said first and second layer reciprocally associated around a core of a third coil; in associating said first and second layer mechanically associated to one another, to at least a third and a fourth layer coming from a third and a fourth single-layer coil through a gluing operation; and in winding said at least four associated layers around a coil so that said first and second layer face said core.

10. Method according to claim 9, characterised in that said first and second layer are associated through a knurling operation.

11. Method according to one or more of the previous claims, characterised in that, after said knurling operation, said at least four layers are subject to an embossing operation.

12. Method according to one or more of the previous claims, characterised in that at least one additive or different additives are added to said four layers on the basis of their expected use.

13. Machine for manufacturing a paper product particularly for sanitary and domestic use, characterised in that it comprises at least one rereeling device arranged downstream of a continuous paper machine, said rereeling device comprising a knurling device for at least two layers of said sheet.
